# EUROPÄISCHE PATENTSCHRIFT

(11) **EP 0 888 047 B1**
(45) Veröffentlichungstag und Bekanntmachung des Hinweises auf die Patenterteilung: **11.08.2004**
(21) Anmeldenummer: 97904451.8
(22) Anmeldetag: 15.02.1997
(51) Int. Cl.: A01N 25/00, A01N 25/28, A01G 7/06

(54) **INJEKTIONSVERFAHREN ZUR VERABREICHUNG WIRKSTOFFHALTIGER MIKROPARTIKEL AN PFLANZEN**
INJECTION METHOD FOR ADMINISTERING MICROPARTICLES CONTAINING ACTIVE SUBSTANCES TO PLANTS
PROCEDE D'INJECTION POUR ADMINISTRER A DES PLANTES DES MICROPARTICULES CONTENANT UN PRINCIPE ACTIF

(30) Priorität: 16.03.1996 DE 19610398
(43) Veröffentlichungstag der Anmeldung: 07.01.1999
(73) Patentinhaber: LTS Lohmann Therapie-Systeme AG, 56626 Andernach (DE)
(72) Erfinder: HOFFMANN, Hans-Rainer, D-56566 Neuwied (DE); KLOCZKO, Malgorzata, D-53545 Linz (DE); ROREGER, Michael, D-56567 Neuwied (DE)
(74) Vertreter: Flaccus, Rolf-Dieter, Dr.
(86) Internationale Anmeldenummer: PCT/EP1997/000721
(87) Internationale Veröffentlichungsnummer: WO 1997/034474

(56) Entgegenhaltungen:
- EP-A- 0 548 901
- US-A- 4 690 682
- INFORMATORE FITOPATOLOGICO, Bd. 36, Nr. 11, 1986, Seiten 29-34, XP000674927 BERTUCCI: "Il tarlo vespa del pioppo" & STN International, File ---CABA---, STN accession no.88:36369
- DATABASE WPI Derwent Publications Ltd., London, GB; AN 96-072971 XP002032117 & JP 07 328 415 A (MITSUI TOATSU CHEM INC ) 19.Dezember 1995

## Beschreibung

Die vorliegende Erfindung betrifft Verfahren zur Verabreichung wirkstoffhaltiger fließfähiger, fester, halbfester oder flüssiger Medien mit kontrollierter Freisetzung mindestens eines Wirkstoffes an Pflanzen durch Injektion unter Verwendung nadelloser druckmittelbetätigbarer Geräte.

Die Verwendung nadelloser druckmittelbetätigter Injektionsgeräte zur Verabreichung bioaktiver Stoffe an Pflanzen ist aus dem Stand der Technik bekannt. Beispielsweise beschreibt DE-OS 25 55 092 den Einsatz von Druckinjektoren mit einer Vielzahl on Einspritzdüsen zur Behandlung von Pflanzen.
Aus der Patentschrift US 3,069,809 sind ebenfalls druckmittelbetätigte Injektionsvorrichtungen ohne Injektionskanüle bekannt, mittels derer Wirkstoffe in , Pflanzen eingebracht werden.

Die Verwendung nadelloser Hochdruckinjektoren stellt eine günstige Alternative zu konventionellen Injektionsverfahren dar. Bedingt durch die Tatsache, daß mittels nadelloser Injektionstechnik relativ hochviskose Medien injiziert werden können, ist es möglich, unter deren Einsatz auch polymerhaltige Flüssigkeiten in die zu behandelnden Pflanzen einzuspritzen. Dies ist insofern von besonderer Bedeutung, als das Injektionsmedium eine Formulierung mit gesteuerter Freisetzung sein kann.
Ein weiterer Vorteil dieser nadellosen Injektionstechnik und entsprechender Vorrichtungen, mit denen sehr hohe Drücke aufgebaut werden können, liegt in der Möglichkeit einer Behandlung von Gewächsen mit relativ dickem Holzkörper.

Eine Verabreichung von Wirkstoffzubereitungen mit kontrollierter Freisetzung an Pflanzen durch Injektion partikulärer Wirkstoffträger ist ebenfalls bekannt.
Die US 5 275 819 beschreibt ein enterisch zu verabreichendes (injizierbares bzw. implantierbares) Zuführungssystem von biologisch aktiven Substanzen an lebende Organismen (Mensch, Teir und Pflanze). Das bekannte System besteht aus einer Vielzahl von natürlichen, d. h. in tierischen bzw. pflanzlichen Organismen vorkommenden, wirkstoffhaltigen Mikrokugeln (Mikrosphären), die im Anwendungsbereich Wirkstoffe kontrolliert freisetzen.

Die US 4 690 682 beschreibt ein Wirkstoffabgabesystem, mit dessen Hilfe eine Verzögerung der Wirkstofffreisetzung in einem menschlichen, tierischen bzw. pflanzlichen Körper erreicht wird. Es handelt sich hierbei um injizierbare wirkstoffhaltige Mikrokapseln von einer Größe zwischen 0,1 und 3,0 µm mit einer porösen, freisetzungskontrollierenden Membran.

B.M. Bertucci skizziert in Inform. Fitopat. (1986) 29-34 gegen Pflanzenparasiten eingesetzte Mittel, die mikrogekapselte Wirkstoffe innerhalb von porösen Polyamid-Membranen enthalten, über deren Poren der Wirkstoff in das umgebende Pflanzenmaterial gelangt. Soweit ersichtlich, wird diese Partikel-Suspension mittels Injektionsnadel injiziert.

Diese Druckschriften weisen auf Vorteile der Mikroverkapselung von Wirksubstanzen bei der Berabreichung an lebende Organismen, darunter auch Pflanzen hin, insbesondere auf Stabilitätserhöhung, Fixierung flüchtiger Stoffe und Toxizitätsminderung. Besonders die Toxizitätsminderung ist im Falle einer Injektion bei Pflanzen mit einem relativ hohen phytotoxischen Potential eine Verabreichungsform von entscheidender Bedeutung, wie beispielsweise in einschlägiger Literatur (F. Müller, "Phytopharmakologie") dokumentiert.

Durch Mikroverkapselung der injizierbaren Substanzen wird darüber hinaus gewährleistet, daß diese nicht dem direkten Einfluß des pflanzlichen Stoffwechsels ausgesetzt sind. Es ist nämlich bekannt, daß die Verteilung organischer Verbindungen innerhalb der Pflanze, speziell dann, wenn sie im Phloem erfolgt, durch einige Faktoren beeinträchtigt bzw.begrenzt wird. Es handelt sich dabei inbesondere um Adsorption , Komplex- und Konjugatbildung sowie Abgabe aus den Siebröhren in benachbarte Siebparenchymzellen, welche den Transport exogener Stoffe nachteilig beeinflussen können.
An dieser Stelle soll jedoch darauf hingewiesen werden, daß im Gegensatz zu externen Applikationen wie Spritz- bzw. Sprühverfahren bei der Injektion verkapselter Wirkstoffe Anwendungsrisiken nicht völlig auszuschließen sind. Die Eigenschaften der eingesetzten polymeren Ausgangsstoffe, z.B. niedrige Abbaurate, Pflanzenunverträglichkeit, sowie Charakteristika der Partikel,z.B.Partikeldurchmesser, stellen Faktoren dar, die sich auf die Beweglichkeit der per se phloemmobilen Stoffe negativ auswirken können.

Um eine schützende bzw. therapeutische Wirkung entfalten zu können, müssen Wirkstoffe jedoch in entsprechend ausreichenden Mengen zu ihren Wirkungsorten gelangen. Demnach kommt der Frage einer guten Translozierbarkeit eine besondere Bedeutung zu.

Für die effiziente Verteilung der injizierten Mikropartikel in Leitungsbahnen der Pflanze spielt nicht nur ihre Größe und/oder chemische Zusammensetzung, sondern auch die Insertionstiefe eine Rolle. Dies gilt insbesondere für Pflanzen mit sekundärem Dickenwachstum, wie Holzgewächse, bei denen primäre und sekundäre Holzparenchymstrahlen, in denen hauptsächlich organische Verbindungen verfrachtet werden, in unterschiedlichen Tiefen das Holz durchziehen. Für die Durchdringung eines dicken Holzkörpers, der nicht selten mehrere Jahresringe aufweist, und für die Steuerung der Insertionstiefe werden geeignete Zuführungssysteme benötigt. Als geeignete Zuführungssysteme werden hierzu aus dem Stand der Technik bekannte Hochdruckinjektoren verwendet.

Da hinsichtlich der Anwendung wirkstoffhaltiger Mikropartikel bei Pflanzen die Aufmerksamkeit hauptsächlich ihrer Anwendung an Pflanzenoberflächen und weniger ihrer enterischen Verabreichung wie Injektion bzw. Implantation geschenkt wurde, ist die Bedeutung verwendbarer polymerer Ausgangsstoffe im Stand der Technik nicht ausreichend untersucht bzw. beschrieben worden. In diesem Zusammenhang sind im Stand der Technik lediglich natürliche Mikrosphären (Pollen, Sporen) und natürliche bzw. synthetische Polysaccaride (beispielsweise Natriumalginat, Calciumalginat, Pektine, Carrageenan) erwähnt.

Es liegen wenig Erkenntnisse darüber vor, welchen Einfluß die Größe der Partikel auf ihre Translozierbarkeit ausübt. Es kann nämlich nicht ausgeschlossen werden, daß mit steigendem Partikeldurchmesser die Mobilität der partikulären Wirkstoffträger in der Pflanze beeinträchtigt wird.

Für den Bedarf an partikulären Injektionssystemen zur kontrollierten Wirkstofffreigabe innerhalb pflanzlichen Organismen gibt es zur Zeit keine zufriedenstellenden Lösungen.

Die Aufgabe der vorliegenden Erfindung besteht somit darin, ein Verfahren bereitzustellen, mit dem das oben genannte Ziel einer effizienten Verteilung der injizierten Mikropartikel in Leitungsbahnen einer Pflanze realisiert werden kann.
Erfindungsgemäß wird die Aufgabe durch ein Verfahren entsprechend den Merkmalen von Anspruch 1 gelöst.

Im folgenden wird die Erfindung mit ihren Vorteilen näher beschrieben.

Die Erfindung betrifft ein Verfahren zur Verabreichung wirkstoffhaltiger Mikropartikel in einer Größe von maximal 100 µm zur Freisetzung einer wirksamen Menge des Wirkstoffes über einen vorbestimmten Zeitraum durch Injektion unter Verwendung nadelloser druckmittelbetätigbarer Geräte, wobei die Teilchen einen oder mehrere Wirkstoffe in Mischung bzw. zusammen mit einem oder mehreren bioabbaubaren Polymeren oder Copolymeren sowie geeignete Zusatzstoffe folgender Zusammensetzung enthalten:
a) 0,5 - 70 Gew.-% mindestens eines Wirkstoffes
b) 10 - 70 Gew.-% mindestens eines bioabbaubaren Polymers
c) bis zu 20 Gew.-% Formulierungshilfsstoffe.

Erfindungsgemäß werden unter dem Begriff "Mikropartikel" sowohl echte Mikrokapseln, d. h. Mikropartikel, in denen ein Wirkstoffkern von einer polymeren Matrix umgeben ist, als auch monolithische Mikrokapseln (Mikrosphären) verstanden, in denen ein Wirkstoff homogen in einer polymeren Matrix verteilt ist.
Unter dem Begriff "biologisch abbaubar", der gleichbedeutend mit "bioabbaubar" und "biodegradierbar" verwendet ist, wird im Sinne der Erfindung "abbaubar unter Stimulierung durch eine biologisch aktive Umgebung " verstanden.

Damit sind Verbindungen gemeint, die sowohl dem Stoffwechsel höherer Pflanzen zugänglich sind, als auch mikrobiell metabolisiert werden können.
Zur Herstellung der beim erfindungsgemäßen Verfahren eingesetzten Mikropartikel kann jedes bioabbaubae Polymer verwendet werden.

Beispiele sind:
- aliphatische Polyester, wie Poly-E-Caprolacton (TONE ® P787), Poly-3-Hydroxybuttersäure-, Poly-3-hydroxyvaleriansäure-Copolymere, Polyethylensuccinat, Polybutylensuccinat (BIONOLLE ®)
- Polysaccaride, wie Stärke, Natriumalginat (MANUCOL ® LB), Calciumalginat, Carrageenan und Pektine
- Cellulose und ihre Derivate, wie z. B. Mischester Cellulose - Acetat - Butyrat
- Polymilchsäure und Polyglycolsäure sowie ihre Derivate, wie Poly-L-Lactid, Poly-D,L-Lactid sowie Lactid-Glycolid-Copolymere

Das Verhältnis zwischen dem polymeren Wirkstoffträgermaterial und Wirkstoffen kann, je nach gewünschtem Effekt, variieren, muß jedoch der im Anspruch 1 definierten Zusammensetzung entsprechen.
Eine bevorzugte Ausführungsform der beim erfindungsgemäßen Verfahren eingesetzten Partikel weist folgende Bestandteile auf.
a) 35 - 60 Gew.-% eines Wirkstoffes
b) 45 - 50 Gew.-% eines bioabbaubaren Polymers
c) 5 - 10 Gew.-% Zusatzstoffe.

Der biologische Abbau führt zur gleichzeitig verlaufenden Wirkstofffreigabe und wird durch hydrolytische und/oder enzymatische Bioerosion in der Pflanze eingeleitet. Beim Abbau der mit dem erfindungsgemäßen Verfahren applizierten Produkte entstehen hauptsächlich die in ihrer Bioverträglichkeit bekannten Fragmente, die in natürlichen Stoffwechselwegen der Pflanze metabolisiert werden können. Die Intensität und der Umfang des Zerfalls der Partikel im pflanzlichen Organismus hängen von der Art der verwendeten polymeren Materialien ab. Ihre Abbauzeit kann somit durch die geeignete Wahl der Ausgangsstoffe an die Indikationserfordernisse angepaßt werden. Diese Eigenschaft kommt insbesondere der in der pflanzenbaulichen Praxis bestehenden Vielfalt an jeweils individuell benötigter Wirkstoffzufuhr entgegen. Somit können beispielsweise bei Erkrankungen mit sehr hohem anfänglichem Befallsdruck wasserlösliche partikuläre Wirkstoffträger, z. B. hergestellt aus bestimmten Polysacchariden, verwendet werden, die unter den in Leitungsbahnen der Pflanze herrschenden Bedingungen relativ schnell hydrolytisch abgebaut werden können. Eine daraus resultierende rasche Wirkstofffreisetzung führt zu einem gewünschten schnellen Wirkungseintritt.

Eine Wirkstofffreisetzung aus den beim erfindungsgemäßen Verfahren verwendeten Mikropartikeln kann nicht nur auf dem Wege der Bioerosion des polymeren Trägers, sondern auch durch Diffusion aus der Polymermatrix erfolgen. Dies ist insbesondere dann der Fall, wenn die Partikel als Mikrosphärulen ausgebildet sind, d. h. der Wirkstoff physikalisch eingebunden in einer Polymermatrix vorliegt, ohne daß eine gesonderte Kapselwand ausgebildet ist.
Eine diffusionskontrollierte Freisetzung findet auch dann statt, wenn polymere Trägermaterialien hydrophob und weniger den Stoffwechsel der höheren Pflanzen als dem der Mikroorganismen zugänglich sind. Dies gilt beispielsweise für Polyhydroxybutyrat/Polyhydroxyvalerat-Copolymere. Mikrokapseln, deren Matrices im Anwendungsbereich intakt bleiben, fungieren als Wirkstoffdepotzubereitung und finden somit Verwendung bei Injektionen für Langzeitbehandlungen, z. B. bei der Behandlung von Ulmensterben.

Wesentlich für die Erfindung ist die Verwendung von Mikropartikeln, die eine Größe von maximal 100 µm aufweisen.
Der besondere Vorteil dieser Dimensionierung liegt in der dadurch erreichbaren Partikelmobilität in der Pflanze. Im Gegensatz zu den aus dem Stand der Technik bekannten partikulären Wirkstoffträgern, deren Teilchendurchmesser im Bereich von 100-3000 µm liegen, entspricht die Größe der im erfindungsgemäßen Injektionsverfahren eingesetzten Partikel der Durchschnittsgröße von Pflanzenzellen (10-100 µm). Dadurch kann ihr Transport im Gewebebereich, der insbesondere für die Stoffverteilung in den Blättern wichtig ist, wesentlich verbessert werden, da die Mikrokugeln aufgrund ihrer relativ geringen Dimension bei gegebener Stabilität diffundierfähig sind. Hinzu kommen ihre Vorteile einer guten Beweglichkeit in den Leitungsbahnen der Pflanze; dies betrifft auch Pflanzen mit kleinlumigen Siebröhren.

Eine bevorzugte Ausführungsform der beim erfindungsgemäßen Verfahren eingesetzten partikulären Wirkstoffträger sind Partikel auf Basis von wasserlöslichen Polysacchariden (z.B. Stärke, Alginate, Carraggeenan und Pektine).
Da ihre Polymermatrix innerhalb des pflanzlichen Organismus relativ schnell zu osmotisch wirksamen Substanzen (z.B. Oligosacchariden) umgewandelt werden kann, werden sie bevorzugt im Phloem transportiert. Dies ist insbesondere dann vorteilhaft, wenn wachsende Pflanzenteile (Meristeme) mit Wirkstoffen versorgt werden sollen.

Unter den Wirkstoffen, die mittels des erfindungsgemäßen Verfahrens in partikulärer Form injiziert werden können, sind Substanzen zu nennen, mit denen Vorgänge im tierischen oder pflanzlichen Organismus beeinflußt werden können. Hierzu sind in erster Linie systemisch wirkende Pflanzenschutzmittel, z.B. Insektizide, Akarizide, Fungizide und Bakterizide zu nennen.

Systematische Insektizide sind beispielsweise Buthocarboxim, Dimethoat, Fenoxycarb, Methamyl, Oxamyl, Oxydemteton-methyl, Pirimicarb oder Propoxur.

Systemische Akarizide sind beispielsweise Clofentizin, Fenbutation-oxyd und Hexythiazox.

Systemische Fungizide sind beispielsweise Benomyl, Bromuconazol, Bitertanol, Etaconazol, Flusilazol, Furalaxyl, Fosetyl-A1, Imazalil, Metalaxyl, Penconazol, Propiconazol, Thiabendazol, Triadimefon, Tridimenol oder Triforine.

Unter den systemischen Bakteriziden ist beispielsweise Flumequine zu nennen. Systemische Wachstumsregulatoren sind beispielsweise Etephon und β-Indolylessigsäure (IES).

Ein weiterer mit der Erfindung erreichbarer Vorteil ist darin zu sehen, daß hierfür vorgesehene Injektionsmedien sowohl in fließfähiger als auch in fester Form vorliegen können. Da es sich hier um eine Düseninjektion von kleindimensionierten Mikropartikeln handelt, wird das bei herkömmlichen Injektionssystemen auftretende Problem des Nadelverschlusses vermieden.

Besonders bevorzugt wird ein Verfahren, bei dem die zu injizierende erfindungsgemäße Zusammensetzung in flüssigen Vehikeln formuliert wird. Geeignete flüssige Vehikel schließen Wasser, NPK-Mineraldünger-Lösung und vegetabile Öle ein. Als besonders geeignet ist hierbei Wasser hervorzuheben.

Adjuvantien können nach Bedarf hinzugefügt werden. Diese können Dispergiermittel, wie Polysorbat 80 oder Verdickungsmittel wie Carboxymethylcellulose einschließen. In Abhängigkeit von der Herstellungsart beim erfindungsgemäßen Verfahren können auch andere dem Fachmann bekannte Adjuvantien einbezogen werden.

Die Erfindung wird durch das nachstehende Beispiel näher beschrieben:

### Beispiel 1

8,8 g Poly-D,L-Lactid-co-glycolid (Molverhältnis 50:50) werden in 240 ml Dichlormethan gelöst und in ein mit einem Rührwerk ausgerüstetes Reaktionsgefäß überführt.
0,36 g des Wirkstoffes Al-Fosetyl werden bei einer Rührgeschwindigkeit von 500 U/min suspendiert. Anschließend werden unter fortgesetztem Rühren schrittweise 54 g Sesamöl zugegeben. Nach vollständiger Zugabe des Sesamöls wird das die Rohmikrokapseln enthaltende Gemisch in dünnem Strahl unter ständigem Rühren (bei 1000 U/min) kontinuierlich in 4 1 eines Capryl-Caprinsäure-Triglycerides (Miglyol ® 812, Viskosität 27 bis 33 mPa·s bei 20° C dispergiert. Die Härtung der Mikrokapseln erfolgt in einem Zeitraum von 60 min. Die so enthaltenen Mikrokapseln werden abfiltriert, zweimal mit Isopropanol gewaschen und getrocknet.
Die Partikel enthalten 2,8 Gew.-% des Wirkstoffes. Der mittlere Teilchendurchmesser beträgt 25,5 µm.
Unmittelbar vor der Anwendung werden 270 mg Mikrokapseln bei 37 ° C in 120 ml Wasser suspendiert.
Die so enthaltene Suspension wird in ein durckmittelbetätigtes nadelloses Injektionsgerät (Typ Demo-Jet) abgefüllt und an der Basis eines teilweise verholzten zweijährigen Triebes (Rubus idaeus) mit einem Druck von 8,1 bar in das Pflanzengewebe eingespritzt.

## Patentansprüche

1. Verfahren zur Verabreichung eines fließfähigen festen, halbfesten oder flüssigen Mediums mit kontrollierter Freisetzung mindestens eines Wirkstoffes an Pflanzen durch Injektion unter Verwendung nadelloser druckmittelbetätigbare Geräte, **dadurch gekennzeichnet, daß** das Medium wirkstoffhaltige Mikropartikel in einer Größe von maximal 100 µm in Form von monolithischen Mikrosphären, in denen der Wirkstoff in einer Polymer-Matrix homogen verteilt ist oder von durch Polymermaterial umgebenen Wirkstoffkernen enthält, die folgende. Komponenten aufweisen:
a) 0,5 - 70 Gew.-% mindestens eines Wirkstoffes,
b) 10 - 70 Gew.-% mindestens eines bioabbaubaren Polymers,
c) bis zu 20 Gew-% Formulierungshilfsstoffe,
wobei die Wirkstofffreisetzung zumindest zum Teil durch den Abbau des Polymeren bestimmt wird.

2. Verfahren nach Anspruch 1, **dadurch gekennzeichnet, daß** die Mikropartikel als Dispersion in einer wässrigen. Phase vorliegen.

3. Verfahren nach einem der Ansprüche 1 oder 2, **dadurch gekennzeichnet, daß** die biologisch abbaubaren Polymere ausgewählt sind aus der Gruppe bestehend aus Polymilchsäure, Polyglycolsäure, Polylactide sowie ihren copolymeren, Cellulose und ihren Derivaten, aliphatischen Polyestern und Polysacchariden.

4. Verfahren nach Anspruch 3, **dadurch gekennzeichnet, daß** als biologisch abbaubare Polymere wasserlösliche Polysaccharide wie Stärke, Alginsäuren und ihre Salze, Carrageenane und Pektine eingesetzt werden.

## Claims

1. Process for the administration of a flowable solid, semi-solid, or liquid medium exhibiting controlled release of at least one active substance to plants by means of injection using needle-free, pressure-actuated devices, **characterized in that** the medium comprises active substance-containing microparticles of a maximum size of 100 µm in the form of monolithic microspheres wherein the active substance is homogenously distributed in a polymer matrix or in the form of active substance cores surrounded by polymer material, which microparticles contain the following components:
a) 0.5 - 70%-wt. of at least one active substance,
b) 10 - 70%-wt. of at least one biodegradable polymer,
c) up to 20%-wt. of formulation adjuvants,
the active substance release being, at least partially, determined by the degradation of the polymer.

2. The process according to claim 1 **characterized in that** the microparticles are present as dispersion in an aqueous phase.

3. The process according to any one of claims 1 or 2 **characterized in that** the biologically degradable polymers are selected from the group consisting of polylactic acid, polyglycolic acid, polylactides as well as their copolymers, cellulose and its derivatives, aliphatic polyesters, and polysaccharides.

4. The process according to claim 3 **characterized in that** water-soluble polysaccharides, such as starch, alginic acids and their salts, carragheenans, and pectins are used as biologically degradable polymers.

## Revendications

1. Procédé pour l'administration d'un milieu solide, semi-solide ou liquide apte à l'écoulement, avec une libération contrôlée d'au moins un principe actif à des plantes par injection en utilisant des appareils qui peuvent être actionnés sous pression en l'absence d'aiguilles, **caractérisé en ce que** le milieu contient des microparticules contenant un principe actif, qui possèdent une dimension maximale de 100 µm sous la forme de microsphères monolithiques dans lesquelles le principe actif est réparti de manière homogène dans une matrice polymère, ou contient des noyaux de principe actif entourés par une matière polymère, lesdits noyaux présentant les composants ci-après :
a) au moins un principe actif à concurrence de 0,5 à 70 % en poids,
b) au moins un polymère biodégradable à concurrence de 10 à 70 % en poids,
c) des adjuvants de formulation jusqu'à concurrence de 20 % en poids,
dans lequel la libération du principe actif est déterminée au moins en partie par la dégradation du polymère.

2. Procédé selon la revendication 1, **caractérisé en ce que** les microparticules sont présentes sous la forme d'une dispersion en phase aqueuse.

3. Procédé selon l'une quelconque des revendications 1 ou 2, **caractérisé en ce que** les polymères biodégradables sont choisis parmi le groupe constitué par l'acide polylactique, l'acide polyglycolique, des polylactides et leurs copolymères, la cellulose et leurs dérivés, des polyesters aliphatiques et des polysaccharides.

4. Procédé selon la revendication 3, **caractérisé en ce qu'**on met en oeuvre, à titre de polymères biodégradables, des polysaccharides hydrosolubles tels que l'amidon, des acides alginiques et leurs sels, des carraghénanes et des pectines.
